# EUROPEAN PATENT APPLICATION

(11) **EP 1 421 980 A1**
(43) Date of publication of application: **26.05.2004**
(21) Application number: 03256196.1
(22) Date of filing: 01.10.2003
(51) Int. Cl.: A63G 19/18, A63G 19/20, B62D 57/02

(54) **Electric toy adapted to carry a user and to mimic walking movement**

(30) Priority: 25.11.2002 US 304387
(71) Applicant: Kwok, Kee-Man, Kwai Chung, New Territories Hong Kong (CN)
(72) Inventor: Kwok, Kee-Man, Room 11, 3rd Floor, Kwai Chung, New Territories Hong Cong (CN); Zeng, Zhixin, Guangzhou (CN); Li, Weiguang, Guangzhou (CN)
(74) Representative: Howe, Steven

(57) **Abstract**

A toy horse (100, 200) is disclosed as including a body (102, 202) for carrying a user, four legs (104a, 104b, 104c, 104d, 204a, 204b, 204c, 204d) mounted for movement relative to the body (102, 202), and motors (106a, 106b, 206) operatively associated with a number of gears (108a, 108b, 108c, 108d, 208a, 208b, 208c, 208d) each associated with a respective leg (104a, 104b, 104c, 104d, 204a, 204b, 204c, 204d) which is movable by the respective gears (108a, 108b, 108c, 108d, 208a, 208b, 208c, 208d) to exhibit walking movement. Each leg (204a, 204b, 204c, 204d) is provided with a respective wheel (230a, 230b, 230c, 230d), drivenable by a respective motor (232a, 232b, 232c, 2332d), and the motors (232a, 232b) driving the wheels (230a, 230b) of the right legs (204a, 204b) are operable independently from the motors (232c, 232d) driving wheels (230c, 230d) of the left legs (204c, 204d).

## Description

### An Electric Toy

This invention relates to an electric toy and, in particular, such a toy which is in the general shape of an animal and adapted to carry a user, e.g. a child, for movement.

### Background of the Invention

There are in existence a number of electric toys adapted to carry a user, e.g. a child. Such include, for example, electric toy cars or the like which may be operated by the child. However, children, especially young boys, are keen on riding animals, in particular horses. Existing toy horses usually cannot mimic the walking movement of real horses. Such conventional toy horses can also only exhibit forward movement, and cannot therefore turn during operation.

It is thus an object of the present invention to provide an electric toy in which the aforesaid shortcomings can be mitigated, or at least to provide a useful alternative to the public.

It is a further object of the present invention to provide an electric toy capable of mimicking the walking movement of real animals, and thus to enhance the fun of playing.

It is a yet further object of the present invention to provide an electric toy which can exhibit turning movement during operation.

### Summary of the Invention

According to a first aspect of the present invention, there is provided an electric toy including a body member for carrying a user, a plurality of limb members mounted on said body member for movement relative to said body member, and at least a first motor operatively associated with a plurality of gear members each associated with a respective limb member, wherein said limb members are movable by said gear members to exhibit walking movement.

According to a second aspect of the present invention, there is provided an electric toy including a body member for carrying a user, said body member carrying at least a right limb member and a left limb member, each said limb member carrying a respective wheel member, a first motor operable to drive said wheel member of said right limb member, and a second motor operable to drive said wheel member of said left limb member, wherein said first and second motors are operable independently.

### Brief Description of the Drawings

Preferred embodiments of the present invention will now be described, by way of examples of only, with reference to the accompanying drawings, in which:
Fig. 1 is a side sectional view of part of a toy horse according to a first embodiment of the present invention;
Fig. 2 is a top sectional view of the part of the toy horse shown in Fig. 1;
Fig. 3 is an enlarged view showing the mechanism allowing a leg of the toy horse shown in Fig. 1 to exhibit walking movement;
Figs. 4A to 4H show the sequence of movement of the leg shown in Fig. 3 through one cycle;
Fig. 5 is a side sectional view of part of a toy horse according to a second embodiment of the present invention;
Fig. 6 is a top sectional view of the part of the toy horse shown in Fig. 5;
Fig. 7 is a schematic drawing showing the electrical connection of a programmable logic control (PLC) used in the toy horse shown in Fig. 5;
Fig. 8 is a schematic drawing showing the electrical connections between the motors and the switches shown in Fig. 7;
Fig. 9 is a top view of a balancing mechanism incorporated in the toy horse shown in Fig. 5; and
Fig. 10 is a side view of the balancing mechanism shown in Fig. 9.

### Detailed Description of the Preferred Embodiments

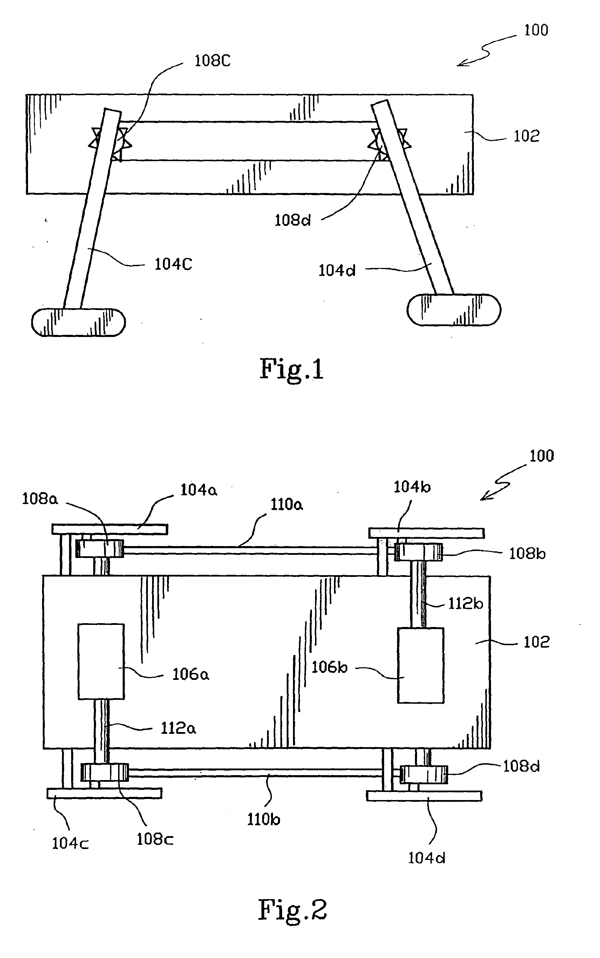

Figs. 1 and 2 show, respectively, a side sectional view and a top sectional view, of a toy animal; e.g. a toy horse, according to a first preferred embodiment of the present invention, generally designated as 100. Such parts as the head or tail of the toy horse 100 are removed for clarity purpose.

The toy horse 100 has a body 102 to which a right front leg 104a, a right rear leg 104b, a left front leg 104c, and a left rear leg 104d are mounted in a manner to be discussed below. Housed within the body 102 are two electric motors 106a, 106b powered by electric batteries (not shown). Each leg 104a, 104b, 104c, 104d is engaged with a respective gear 108a, 108b, 108c, 108d. The gears 108a, 108b on the right side of the body 102 are connected by a chain 110a for simultaneous rotational movement in the same direction. Similarly, the gears 108c, 108d on the left side of the body 102 are also connected by a chain 110b for simultaneous rotational movement in the same direction.

The motor 106a is arranged to drive the gear 108c via a spindle 112a. Because of the connection between the gear 108c and the gear 108d by the chain 110b, the gear 108d is also drivenable by the motor 106a. Similarly, the motor 106b is arranged to drive the gear 108b *via* a spindle 112b. Because of the connection between the gear 108a and the gear 108b by the chain 110a, the gear 108a is also drivenable by the motor 106b. Buttons and/or switches may be arranged, in the conventional manner, to activate or deactivate the motors 106a, 106b, so as to control the operation of the motors 106a, 106b, and thus the rotation of the gears 108a, 108b, 108c, 108d, whether in the forward or rearward direction.

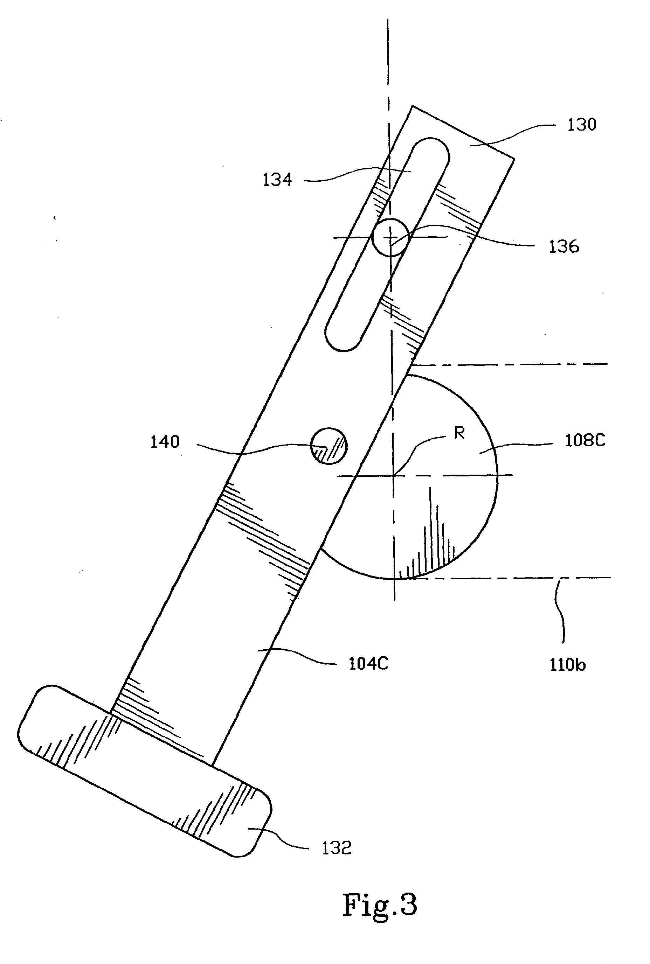

Fig. 3 shows in clearer details the mechanism allowing the left front leg 104c to mimic walking movement of a leg of a real horse. Other legs 104a, 104b, 104d are of similar structure and arrangement. As can be seen in Fig. 3, the left front leg 104c of the horse 100 has an elongate portion 130 extending generally downwardly towards a wider bottom part 132. Along the elongate portion 130 is provided with a slot 134 through which a guiding pin 136 extends for relative reciprocating movement. The guiding pin 136 is fixedly secured relative to the body 102 of the toy horse 100. The gear 108c is also fixed relative to the body 102 of the toy horse, except for rotation movement about a centre R. Away from the centre R of the gear 108c is provided with a pin 140, which is engaged with the elongate portion 130 of the leg 104c, and allows the leg 104c to rotate relative to the pin 140. By way of such an arrangement, the leg 104c, and similarly other legs 104a, 104b, 104d, may exhibit movement similar to walking movement of legs of a real horse, to be discussed in more details below.

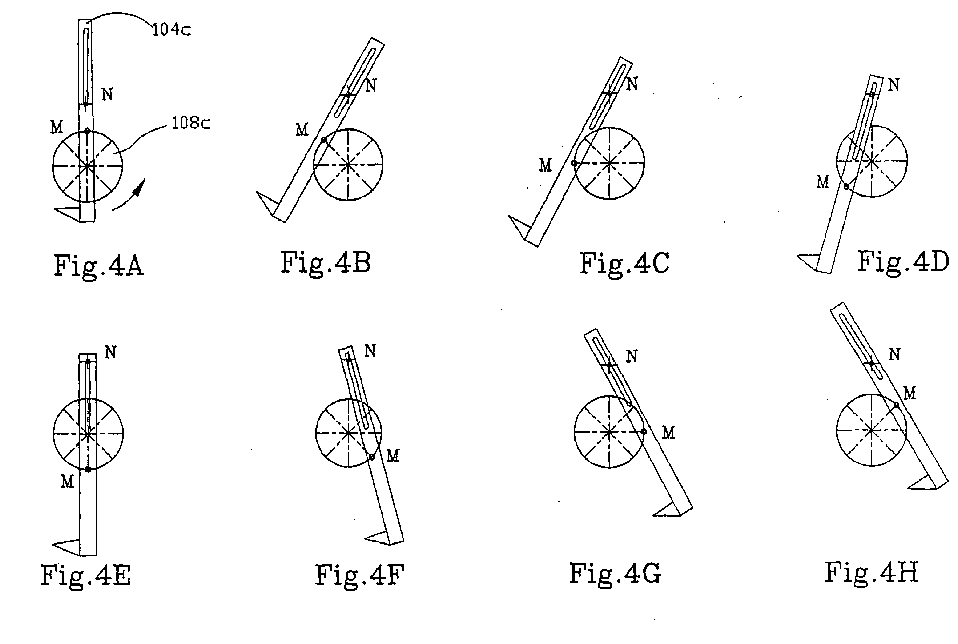

Figs. 4A to 4H show the relative positions of the leg 104c and the gear 108c during movement of the leg 104c relative to the gear 108c, caused by self-rotation of the gear 108c in the counter-clockwise direction through a cycle. In these eight figures, the letter "N" stands for the position of the pin 136, which remains stationary, and the letter "M" stands for the position of the pin 140, which also rotates during rotation of the gear 108c.

In Fig. 4A, M is at the uppermost position (i.e. 12 o'clock position), and the leg 104c is vertically oriented and also at its uppermost position. When the gear 108c rotates through 45° in the counter-clockwise direction, M moves to the position shown in Fig. 4B, during which the leg 104c descends. Further rotation of the gear 108c would bring the legs 104c to the positions shown in Fig. 4C and subsequently 4D, until when the gear 108c has rotated through 180° from its original position as shown in Fig. 4A, and as shown in Fig. 4E, M will be at its lowermost position (i.e. 6 o'clock position), in which the leg 104c will touch the surface on which the toy horse 100 moves. Further rotation of the gear 108c will cause the leg 104c to push against the surface to move the toy horse 100 forward. The leg 104c will be caused by further rotation of the gear 108c to assume the positions shown in Figs. 4F, 4G, 4H and back to 4A, when the gear 108c has rotated for a full cycle.

In order to ensure proper balance of the toy horse 100 during walking, the original relative positioning of the four legs 104a, 104b, 104c, 104d are different. In particular, the right front leg 104a is engaged with the body 102 in the relative position as shown in Fig. 4A; the right rear leg 104b is engaged with the body 102 in the relative position as shown in Fig. 4C; the left front leg 104c is engaged with the body 102 in the relative position as shown in Fig. 4E; and the left rear leg 104d is engaged with the body 102 in the relative position as shown in Fig. 4G. In this way, the two front legs 104a, 104c rotate relative to the body 102 out-of-phase by 180°. Similarly, the two rear legs 104b, 104d also rotate relative to the body 102 out-of-phase by 180°.

It can be seen that, by way of the arrangement discussed above, the legs 104a, 104b, 104c, 104d may be operated and controlled to mimic walking movement of legs of a real horse, so as to move the toy horse 100 forward or rearward.

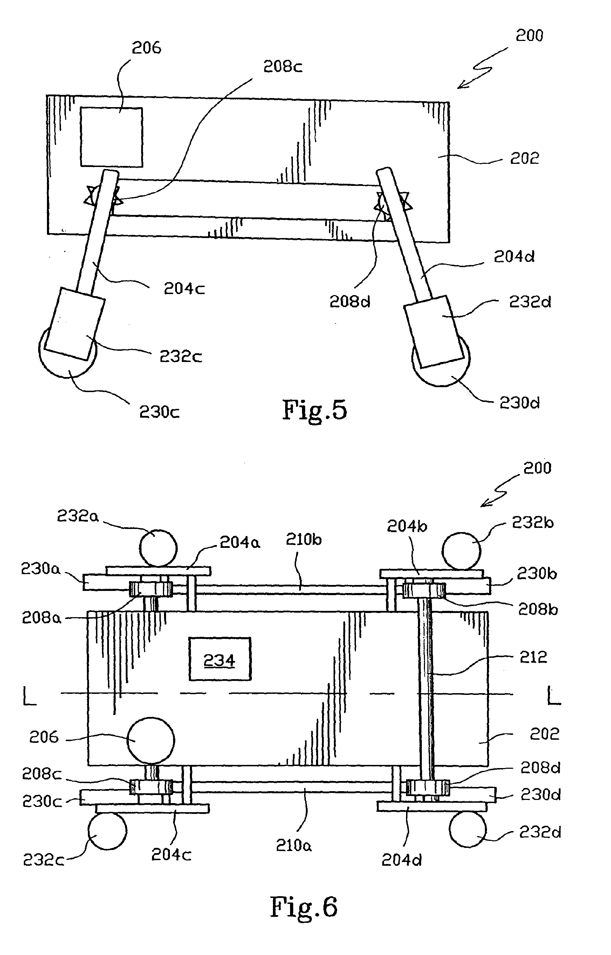

Figs. 5 and 6 show, respectively, a side sectional view and a top sectional view, of a toy horse according to a second preferred embodiment of the present invention, generally designated as 200. Again, such parts as the head or tail of the toy horse 100, and electric batteries, are removed for clarity purpose.

The toy horse 200 also has a body 202 to which four legs 204a, 204b, 204c, 204d are mounted symmetrical to a longitudinal axis L-L of the body 202 for relative rotational movement, in the manner discussed above. In this embodiment, a single main motor 206 is provided for driving the legs 204a, 204b, 204c, 204d. In particular, the main motor 206 is arranged to drive a gear 208c engaged with the leg 204c. The gear 208c is connected *via* a chain 210a with a gear 208d engaged with the leg 204d. The gear 208d is connected with a gear 208b via an axle 212. The gear 208b is engaged with the leg 204b. The gear 208b is connected with a gear 208a via a chain 210b. By way of such an arrangement, the legs 204a, 204b, 204c, 204d may be driven by the motor 206 to move in the same direction to mimic the walking movement of a real horse.

At the bottom end of each leg 204a, 204b, 204c, 204d is provided with a respective wheel 230a, 230b, 230c, 230d, which may rotate about a respective axis which is transverse to the longitudinal axis of the body 202. Each of the wheel 230 is drivenable by a respective motor 232a, 232b, 232c, 232d. The operation of the motors 206, 232a, 232b, 232c, 232d is controlled by a programmable logic controller (PLC) 234 within the body 202 of the toy horse 200. An appropriate PLC 234 may be one traded by Mitsubishi Electric Corporation, of Japan, under their FXos series.

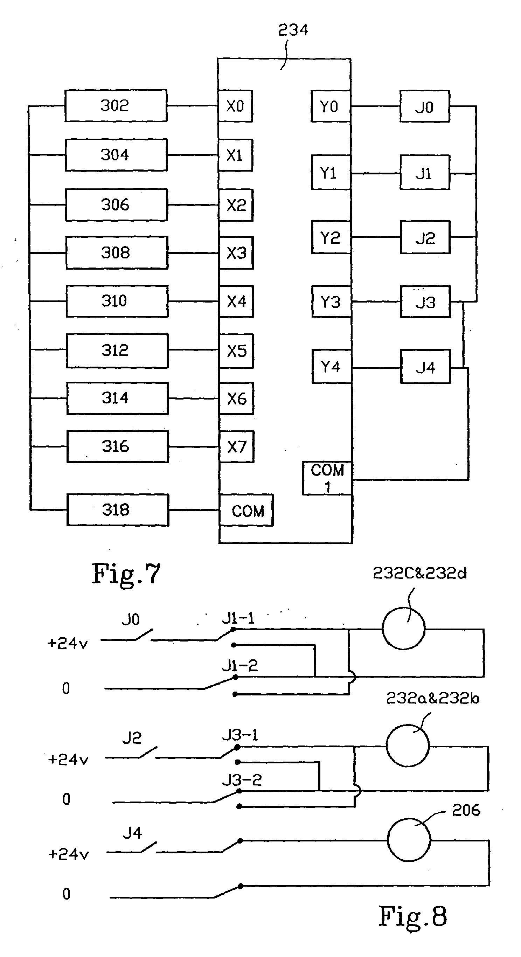

As shown in Fig. 7, input ends of the PLC 234 are connected with a number of buttons, including:
- FORWARD button 302 operable to cause the horse 200 to move forward;
- STOP button 304 operable to stop all movement of the horse 200;
- SLOW LEFT TURN button 306 to cause the horse 200 to turn to the left slowly;
- QUICK LEFT TURN button 308 to cause the horse 200 to turn to the left quickly;
- SLOW RIGHT TURN button 310 to cause the horse 200 to turn to the right slowly;
- QUICK RIGHT TURN button 312 to cause the horse 200 to turn to the right quickly;
- REARWARD button 314 operable to cause the horse 200 to move backward; and
- WALKING button 316 operable to cause the horse 200 to move forward by reason of the walking motion of the legs 204a, 204b, 204c, 204d.

Connection 318 is connected to the common port "COM" of the input end of the PLC 234. Output ends Y0, Y1, Y2, Y3, Y4 of the PLC 234 are connected to five sets of switches, namely (a) J0, (b) J1-1, J1-2, (c) J2, (d) J3-1, J3-2, and (e) J4.

Connection and further details of the various switches are shown in Fig. 8 and discussed as follows. In particular, Table 1 below shows the various positions/states occupied by the switches J0, J1-1, J1-2, J2, J3-1, J3-2, and J4 when the respective buttons are activated.

**Table 1**

| Button Activated | J0 | J1-1 & J1-2 | J2 | J3-1 & J3-2 | J4 |
|---|---|---|---|---|---|
| FORWARD 302 | C | + | C | + | O |
| STOP 304 | O | +/- | O | +/- | O |
| SLOW LEFT TURN 306 | C | + | O | +/- | O |
| QUICK LEFT TURN 308 | C | + | C | - | 0 |
| SLOW RIGHT TURN 310 | O | +/- | C | + | O |
| QUICK RIGHT TURN 312 | C | - | C | + | O |
| REARWARD 314 | C | - | C | - | O |
| WALKING 316 | O | +/- | O | +/- | C |

In the above Table 1,
- "O", used in relation to the switches J0, J2 and J4, means "Open";
- "C", used in relation to the switches J0, J2 and J4, means "Closed";
- "+", used in relation to the switches J1-1, J1-2, J3-1 and J3-2, means the respective switches are connected as shown in Fig. 8, so that the wheels associated with the relevant motors will rotate forward;
- "-", used in relation to the switches J1-1, J1-2, J3-1 and J3-2, means the respective switches are connected in the alternative positions, in which case the polarity of the electricity driving the respective motors 232c, 232d, 232a, 232b will be reversed, thus causing the respective relevant wheel 230c, 230d, 230a, 230b to rotate backward; and
- "+/-" means that the position of the switches J1-1, J1-2, J3-1 and J3-2 is irrelevant, as the switch J0 and/or J2 (as appropriate) is open.

It can be seen that, when only a slow left turn movement is desired, the motors 232c, 232d will be caused to move the respective wheels 230c, 230d forward, while the motors 232a, 232b are stopped. On the other hand, if a quick left turn movement is desired, the motors 232c, 232d will still be caused to move the respective wheels 230c, 230d forward. The motors 232a, 232b will however be caused to move the respective wheels 230a, 230b backward, thus speeding up the turning movement.

It can be seen that there are two modes of forward movements. In the first mode, the FORWARD button 302 is activated. All the motors 232a, 232b, 232c, 232d are then powered to cause the respective wheel 230a, 230b, 230c, 230d to rotate forward, thus causing the horse 200 to move forward. In the second mode, the WALKING button 316 is activated. All the motors 232a, 232b, 232c, 232d are stopped, with only the motor 206 activated to cause the gears 208a, 208b, 208c, 208d to rotate so as to bring the legs 204a, 204b, 204c, 204d into walking motion, thus causing the horse 200 to walk forward.

Alternatively, it is possible to re-arrange the gearing system such that while the front legs 204a, 204c are caused to exhibit walking movement, the motors 232b, 232d are activated to drive the respective wheel 230b, 230d to rotate forward. It is found that such an arrangement will allow the toy horse 200 to move steadily on grass-land, level road or even slightly steep road.

In order to enhance the balance of the toy horse 100, 200, especially during walking movement of the legs 104a, 104b, 104c, 104d, 204a, 204b, 204c, 204d, a balancing mechanism is incorporated in the toy horse 100, 200. While the balancing mechanism will be discussed below as being installed in the toy horse 200, it is of course readily understood that it may also be incorporated in the toy horse 100.

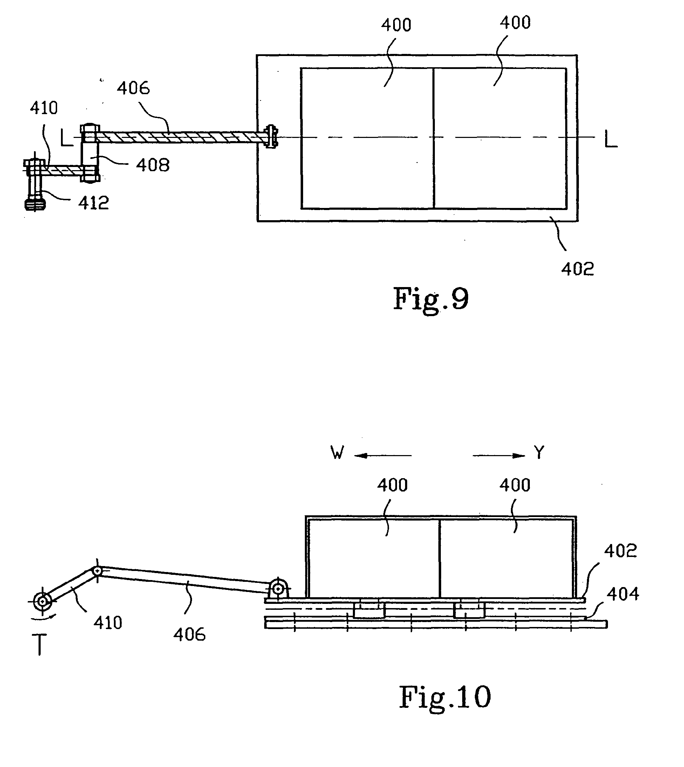

Shown in Figs. 9 and 10 are respective top and side views of a balancing mechanism incorporated in the toy horse 200. The balancing mechanism includes two batteries 400. The batteries 400, on the one hand, provide electric power for operating the toy horse 200, and, on the other hand, act as masses for balancing purpose. The two batteries 400 are placed on a platform 402 for sliding movement relative to a plate 404, which is fixed relative to the body 202 of the toy horse 200. The platform 402 is pivotally connected at one end to a major connecting rod 406, which is in turn pivotally connected to a crank 408. The crank 408 is again connected pivotally to a minor connecting rod 410, which is connected *via* an axle 412, directly or indirectly, to an output spindle of the motor 206 of the toy horse 200.

As can be seen in Fig. 9 that, this balancing mechanism is arranged in such a way that the length of the major connecting rod 406 and that of the minor connecting rod 410 are parallel to the longitudinal axis L-L of the toy horse 200, and that the length of the crank 408, and that of the axle 412 are perpendicular to the longitudinal axis L-L of the toy horse 200. By way of such an arrangement, rotation of the output spindle of the motor 206 will cause the axle 412 to rotate in the direction indicated by the arrow T in Fig. 10, thus bringing the minor connecting rod 410 to rotate about the axle 412 in the anti-clockwise direction, in the sense of Fig. 10, which will in turn pull the platform 402, and the batteries 400 thereon, to move in the direction indicated by the arrow W. Further rotation of the axle 412 will eventually push the platform 402, and the batteries 400 thereon, to move in the direction indicated by the arrow Y. The batteries 400 will thus move reciprocate along a line parallel to the longitudinal axis of the body 202 of the toy horse 200.

The same motor 206 drives the legs 204a, 204b, 204c, 204d to exhibit walking movement, and drives the batteries 400 to exhibit reciprocating movement. It is so arranged that the batteries 400 will exhibit a cycle of reciprocating movement simultaneously with a cycle of walking movement of the legs 204a, 204b, 204c, 204d. The movement of the batteries 400 and that of the legs 204a, 204b, 204c, 204d are thus synchronized. It can be seen that, because of the relative heaviness of the batteries 400, reciprocating movement thereof parallel to the longitudinal axis L-L of the toy horse 200 will significantly vary the centre of gravity of the toy horse 200, also in a cyclical manner, and will thus assist in balancing the toy horse 200 during its movement, especially during walking movement of the legs 204a, 204b, 204c, 204d.

To be more precise, when the right front leg 230a starts to move upward from its lowermost position, i.e. lift from the ground, the batteries 400 will slide relative to the plate 404 towards the front end of the body 202. The batteries 400 will continue to move relative to the plate 404, and thus relative to the body 202, towards the front end of the body 202 until the right front leg 230a reaches its uppermost position, at which point the batteries are at their front-most position. When the front leg 230a starts to descend from its uppermost position, the batteries 400 will start to slide relative to the plate 404 towards the rear end of the body 202. The batteries 400 will continue to move relative to the plate 404, and thus relative to the body 202, towards the rear end of the body 202 until the right front leg 230a reaches its lowermost position, thus completing a cycle of movement, at which point the batteries are at their rearmost position.

It should be understood that the above only illustrates examples whereby the present invention may be carried out, and that various modifications and/or alterations may be made thereto without departing from the spirit of the invention.

It should also be understood that certain features of the invention, which are, for clarity, described in the context of separate embodiments, may be provided in combination in a single embodiment. Conversely, various features of the invention which are, for brevity, described in the context of a single embodiment, may also be provided separately or in any appropriate sub-combinations.

## Claims

1. An electric toy including:
a body member adapted to carry a user;
a plurality of limb members mounted on said body member for movement relative to said body member; and
at least a first motor operatively associated with a plurality of gear members each associated with a respective limb member;
wherein said limb members are movable by said gear members to exhibit walking movement.

2. A toy according to Claim 1 wherein each said limb member is rotatably movable relative to a respective gear member about an axis different from an axis of rotation of said gear member.

3. A toy according to Claim 1 further including a pair of right limb members, wherein the gear members of said right limb members are connected by a chain member.

4. A toy according to Claim 3 wherein said pair of right limb members are drivenable by said first motor.

5. A toy according to Claim 1 further including a pair of left limb members, wherein the gear members of said left limb members are connected by a chain member.

6. A toy according to Claim 5 wherein said pair of left limb members are drivenable by a second motor.

7. A toy according to Claim 1 further including two front limb members which are rotatable relative to said body member out-of-phase by 180°.

8. A toy according to Claim 1 further including two rear limb members which are rotatable relative to said body member out-of-phase by 180°.

9. A toy according to Claim 1 further including a programmable logic controller for controlling the operation of said toy.

10. A toy according to Claim 1 further including at least a mass movable relative to said body member during movement of said limb members.

11. A toy according to Claim 10 further **characterized in that** said mass comprises at least a battery for powering said toy.

12. A toy according to Claim 10 further **characterized in that** said mass is movable substantially parallel to a longitudinal axis of said body member.

13. A toy according to Claim 10 further **characterized in that** said mass is reciprocable along a straight line substantially parallel to a longitudinal axis of said body member.

14. A toy according to Claim 10 further **characterized in that** said mass is positioned on a movable member operatively associated with said first motor.

15. An electric toy including:
a body member adapted to carry a user;
said body member carrying at least a right limb member and a left limb member; each said limb member carrying a respective wheel member;
a first motor operable to drive said wheel member of said right limb member; and
a second motor operable to drive said wheel member of said left limb member;
wherein said first and second motors are operable independently.

16. A toy according to Claim 15 wherein said wheel members are each rotatable about a respective axis substantially transverse to a longitudinal axis of said body member.

17. A toy according to Claim 15 wherein said first and second motors are operable to drive said wheel member of said right limb member and said wheel member of said left limb member to rotate in opposite directions.

18. A toy according to Claim 15 wherein said toy includes two right limb members and two left limb members, each carrying a respective wheel member.

19. A toy according to Claim 18 wherein said first motor is operable to drive said wheel members of said right limb members to rotate in the same direction.

20. A toy according to Claim 18 wherein said second motor is operable to drive said wheel members of said left limb members to rotate in the same direction.

21. A toy according to Claim 15 further including a programmable logic controller for controlling the operation of said toy.

22. A toy according to Claim 15 further including at least a mass movable relative to said body member during movement of said limb members.

23. A toy according to Claim 22 further **characterized in that** said mass comprises at least a battery for powering said toy.

24. A toy according to Claim 22 further **characterized in that** said mass is movable substantially parallel to a longitudinal axis of said body member.

25. A toy according to Claim 22 further **characterized in that** said mass is reciprocable along a straight line substantially parallel to a longitudinal axis of said body member.

26. A toy according to Claim 22 further **characterized in that** said mass is positioned on a movable member operatively associated with said first motor.
